(19) Europäisches Patentamt
European Patent Office
Office européen des brevets

(11) **EP 4 598 053 A1**

(12) **EUROPEAN PATENT APPLICATION**
published in accordance with Art. 153(4) EPC

(43) Date of publication:
**06.08.2025 Bulletin 2025/32**

(21) Application number: **23886295.7**

(22) Date of filing: **01.11.2023**

(51) International Patent Classification (IPC):
*H04R 3/00* (2006.01)   *H04R 3/04* (2006.01)
*G10L 19/26* (2013.01)   *G06N 20/00* (2019.01)
*G06F 3/16* (2006.01)

(52) Cooperative Patent Classification (CPC):
**G06F 3/16; G06N 20/00; G10L 19/26; H04R 3/00; H04R 3/04**

(86) International application number:
**PCT/KR2023/017318**

(87) International publication number:
**WO 2024/096600 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.11.2022  KR 20220143756**
**29.11.2022  KR 20220162586**

(71) Applicant: **Samsung Electronics Co., Ltd.**
**Suwon-si, Gyeonggi-do 16677 (KR)**

(72) Inventors:
• **BAEK, Soonho**
**Suwon-si, Gyeonggi-do 16677 (KR)**

• **KIM, Seonmi**
**Suwon-si, Gyeonggi-do 16677 (KR)**
• **BANG, Kyoungho**
**Suwon-si, Gyeonggi-do 16677 (KR)**
• **MOON, Hangil**
**Suwon-si, Gyeonggi-do 16677 (KR)**
• **LEE, Gunwoo**
**Suwon-si, Gyeonggi-do 16677 (KR)**
• **LEE, Jaeseong**
**Suwon-si, Gyeonggi-do 16677 (KR)**

(74) Representative: **Nederlandsch Octrooibureau**
**P.O. Box 29720**
**2502 LS The Hague (NL)**

(54) **ELECTRONIC DEVICE FOR TRANSMITTING EXTERNAL SOUND AND METHOD FOR OPERATING ELECTRONIC DEVICE**

(57)    An electronic device according to various embodiments may comprise a speaker, an external microphone, an internal microphone, a first filter, a second filter, and a processor operatively connected to the speaker, the external microphone, and the internal microphone. The processor may: estimate a passive feature on the basis of a signal acquired through the external microphone and a signal acquired through the internal microphone; identify a target frequency response with respect to the estimated passive feature on the basis of a reference passive feature; implement a second filter on the basis of the identified target frequency response; and control a signal inputted through the external microphone so as to be sequentially filtered through the first filter and the second filter and then outputted through the speaker.

FIG. 4

## Description

[Technical Field]

Various embodiments disclosed in this document relate to an electronic device and a method of operating the electronic device, for example, to an electronic device and a method of operating the electronic device for hearing an external sound around a user.

[Background Art]

An electronic device that enables a user to hear a particular sound may be implemented in the form of an earphone worn on the user's ear or a headset worn around the user's head.

Earphones inserted near an external auditory canal of an ear or headsets that completely cover an ear are located between the outside and an eardrum; thus, the user may not hear sounds coming from the outside while wearing them.

Accordingly, the earphone and/or the headset may include a microphone implemented in the outside thereof, and output external sounds acquired from the microphone implemented in the outside to a speaker included therein; thus, a user wearing the earphone and/or headset may hear external sounds through the earphone and/or headset.

In order for a user wearing the earphone and/or the headset to hear naturally external sounds, the earphone and/or headset performs a process of inputting external sounds acquired by an external microphone into an appropriate filter and processing them.

[Disclosure of Invention]

[Technical Solution]

According to various embodiments disclosed in this document, an electronic device may include a speaker; an external microphone; an internal microphone; a first filter; a second filter; and a processor operatively connected to the speaker, the external microphone, and the internal microphone. The processor may be configured to control to estimate a passive feature based on a signal acquired through the external microphone and a signal acquired through the internal microphone, to identify a target frequency response for the estimated passive feature based on a reference passive feature, to implement the second filter based on the identified target frequency response, and to sequentially filter the signal input through the external microphone through the first filter and the second filter to output the signal through the speaker.

According to various embodiments disclosed in this document, a method of operating an electronic device may include estimating a passive feature based on a signal acquired through an external microphone of the electronic device and a signal acquired through an internal microphone of the electronic device; identifying a target frequency response for the estimated passive features based on the reference passive feature; and outputting the signal through a speaker of the electronic device by filtering the signal input through the external microphone through a first filter and further filtering the signal through a second filter implemented based on the identified target frequency response.

Technical problems and effects that can be obtained from the disclosure are not limited to the above-described technical problems and effects, and other technical problems and effects that are not described will be clearly understood by a person having ordinary skill in the technical field to which the disclosure belongs from the description below.

[Brief Description of Drawings]

In connection with the description of the drawings, the same or similar reference numerals may be used for the same or similar components.

FIG. 1 is a block diagram illustrating an electronic device within a network environment according to various embodiments.
FIG. 2 is a block diagram illustrating an audio module according to various embodiments.
FIG. 3 is an example of a block diagram illustrating an electronic device according to various embodiments.
FIG. 4 is a flowchart illustrating a method for transmitting an external sound in an electronic device according to various embodiments.
FIG. 5 is a diagram illustrating an example of signal flow and a constitution of an electronic device for external signal transmission according to various embodiments.
FIG. 6 is a graph illustrating signals input through microphones of an electronic device and signal characteristics estimated based thereon and estimated filters according to various embodiments.
FIG. 7 is a graph illustrating estimated signal characteristics based on signals input through microphones according to various variables occurring when wearing an electronic device according to various embodiments.
FIG. 8 is a graph illustrating estimated signal characteristics based on signals input through microphones when wearing an electronic device and deviations based on a reference signal characteristic according to various embodiments.
FIG. 9 is a graph illustrating estimated signal characteristics based on signals input through microphones when wearing an electronic device and deviations based on a reference signal characteristic according to various embodiments.
FIG. 10 is a graph illustrating estimated signal characteristics based on signals input through microphones when wearing an electronic device and compensated deviations based on a reference signal characteristic according to various embodiments.

FIG. 11 is a diagram illustrating an example of signal flow and a constitution of an electronic device that filters and provides external sounds based on signals input through microphones when wearing the electronic device according to various embodiments.

FIG. 12 is a diagram illustrating an example of signal flow and a constitution of an electronic device that filters and provides external sounds based on signals input through microphones when wearing the electronic device according to various embodiments.

FIG. 13 is a diagram illustrating an example of signal flow and a constitution of an electronic device that filters and provides external sounds based on signals input through microphones when wearing the electronic device according to various embodiments.

FIG. 14 is a diagram illustrating an example of learning a method of filtering and providing external sounds based on signals input through microphones of an electronic device by simulating external sounds according to various embodiments.

FIG. 15 is a diagram illustrating an example of signal flow and a constitution of an electronic device that filters and provides external sounds based on signals input through microphones when wearing the electronic device according to various embodiments.

[Mode for the Invention]

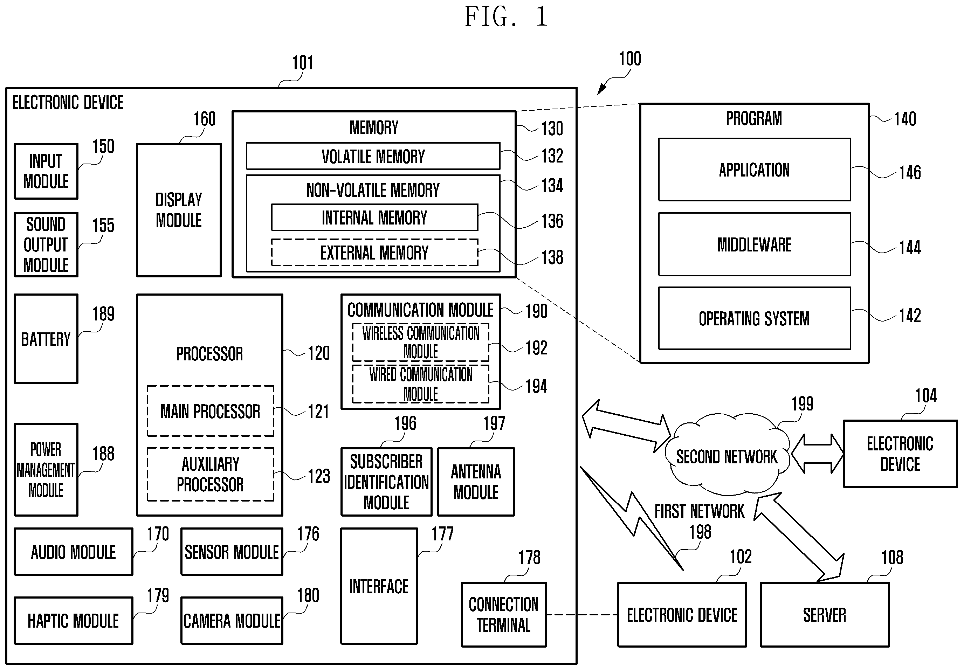

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input 1module 150, a sound output 1module 155, a display 1module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the 11connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160). 11

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display 1module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input 1module 150 may include, for example, a microphone, a mouse, a keyboard, a key (e.g., a button), or a digital pen (e.g., a stylus pen).

The sound output module 155 may output sound signals to the outside of the electronic device 101. The sound output 1module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 1module 160 may include, for example, a display, a hologram device, or a projector and control circuitry to control a corresponding one of the display, hologram device, and projector. According to an embodiment, the display 1module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input 1module 150, or output the sound via the sound output 1module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) there between via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

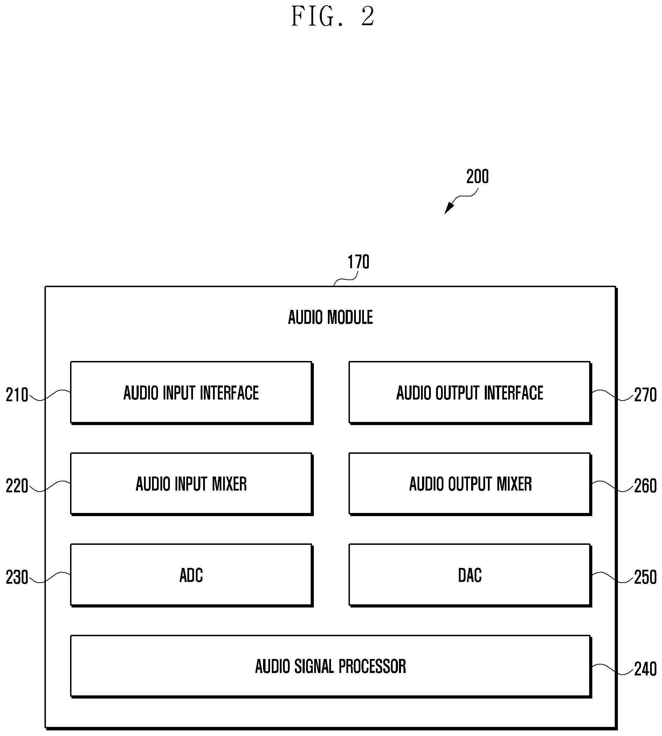

Fig. 2 is a block diagram 200 illustrating the audio module 170 according to various embodiments. Referring to Fig. 2, the audio module 170 may include, for example, an audio input interface 210, an audio input mixer 220, an analog-to-digital converter (ADC) 230, an audio signal processor 240, a digital-to-analog converter (DAC) 250, an audio output mixer 260, or an audio output interface 270.

The audio input interface 210 may receive an audio signal corresponding to a sound obtained from the outside of the electronic device 101 via a microphone (e.g., a dynamic microphone, a condenser microphone, or a piezo microphone) that is configured as part of the input device 150 or separately from the electronic device 101. For example, if an audio signal is obtained from the external electronic device 102 (e.g., a headset or a microphone), the audio input interface 210 may be connected with the external electronic device 102 directly via the connecting terminal 178, or wirelessly (e.g., BluetoothTM communication) via the wireless communication module 192 to receive the audio signal. According to an embodiment, the audio input interface 210 may receive a control signal (e.g., a volume adjustment signal received via an input button) related to the audio signal obtained from the external electronic device 102. The audio input interface 210 may include a plurality of audio input channels and may receive a different audio signal via a corresponding one of the plurality of audio input channels, respectively. According to an embodiment, additionally or alternatively, the audio input interface 210 may receive an audio signal from another component (e.g., the processor 120 or the memory 130) of the electronic device 101.

The audio input mixer 220 may synthesize a plurality of inputted audio signals into at least one audio signal. For example, according to an embodiment, the audio input mixer 220 may synthesize a plurality of analog audio signals inputted via the audio input interface 210 into at least one analog audio signal.

The ADC 230 may convert an analog audio signal into a digital audio signal. For example, according to an embodiment, the ADC 230 may convert an analog audio signal received via the audio input interface 210 or, additionally or alternatively, an analog audio signal synthesized via the audio input mixer 220 into a digital audio signal.

The audio signal processor 240 may perform various processing on a digital audio signal received via the ADC 230 or a digital audio signal received from another component of the electronic device 101. For example, according to an embodiment, the audio signal processor 240 may perform changing a sampling rate, applying one or more filters, interpolation processing, amplifying or attenuating a whole or partial frequency bandwidth, noise processing (e.g., attenuating noise or echoes), changing channels (e.g., switching between mono and stereo), mixing, or extracting a specified signal for one or more digital audio signals. According to an embodiment, one or more functions of the audio signal processor 240 may be implemented in the form of an equalizer.

The DAC 250 may convert a digital audio signal into an analog audio signal. For example, according to an embodiment, the DAC 250 may convert a digital audio signal processed by the audio signal processor 240 or a digital audio signal obtained from another component (e.g., the processor(120) or the memory(130)) of the electronic device 101 into an analog audio signal.

The audio output mixer 260 may synthesize a plurality of audio signals, which are to be outputted, into at least one audio signal. For example, according to an embodiment, the audio output mixer 260 may synthesize an analog audio signal converted by the DAC 250 and another analog audio signal (e.g., an analog audio signal received via the audio input interface 210) into at least one analog audio signal.

The audio output interface 270 may output an analog audio signal converted by the DAC 250 or, additionally or alternatively, an analog audio signal synthesized by the audio output mixer 260 to the outside of the electronic device 101 via the sound output device 155. The sound output device 155 may include, for example, a speaker, such as a dynamic driver or a balanced armature driver, or a receiver. According to an embodiment, the sound output device 155 may include a plurality of speakers. In such a case, the audio output interface 270 may output audio signals having a plurality of different channels (e.g., stereo channels or 5.1 channels) via at least some of the plurality of speakers. According to an embodiment, the audio output interface 270 may be connected with the external electronic device 102 (e.g., an external speaker or a headset) directly via the connecting terminal 178 or wirelessly via the wireless communication module 192 to output an audio signal.

According to an embodiment, the audio module 170 may generate, without separately including the audio input mixer 220 or the audio output mixer 260, at least one digital audio signal by synthesizing a plurality of digital audio signals using at least one function of the audio signal processor 240.

According to an embodiment, the audio module 170 may include an audio amplifier (not shown) (e.g., a speaker amplifying circuit) that is capable of amplifying an analog audio signal inputted via the audio input interface 210 or an audio signal that is to be outputted via the audio output interface 270. According to an embodiment, the audio amplifier may be configured as a module separate from the audio module 170.

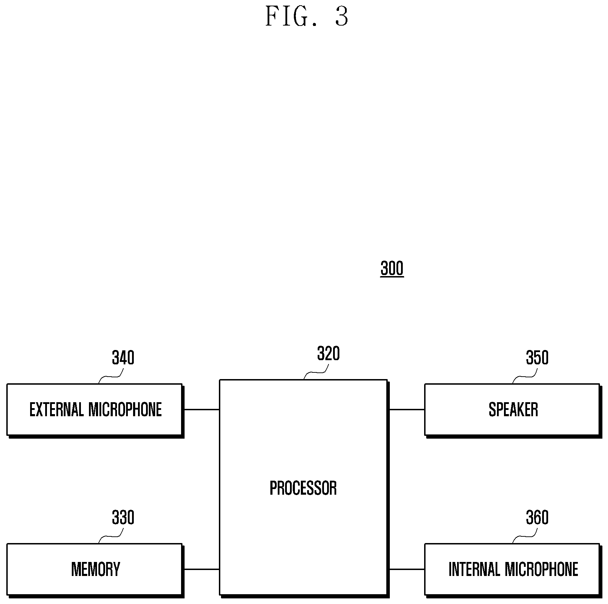

FIG. 3 is a block diagram illustrating an electronic device according to various embodiments disclosed in this document.

With reference to FIG. 3, an electronic device 300 (e.g., the electronic device 101 of FIG. 1) may include a processor 320 (e.g., the processor 120 of FIG. 1), a memory 330 (e.g., the memory 130 of FIG. 1), an external microphone 340, a speaker 350 (e.g., the sound output module 155 of FIG. 1), and/or an internal microphone 360. The components included in FIG. 3 are for some of the components included in the electronic device 300, and the electronic device 300 may include various components, as illustrated in FIG. 1.

According to an embodiment, the external microphone 340 may be located in an area exposed to the outside from an ear inlet when wearing the electronic device 300 to acquire an external input signal. According to an embodiment, the external input signal is a signal acquired by the external microphone 340 and may correspond to at least a portion of a sound generating outside the electronic device 300. According to an embodiment, the external input signal may refer to any one of an external sound wave, an external electrical signal, an external pulse coded modulation (PCM) signal, and/or an external frequency signal acquired by the external microphone 340.

According to an embodiment, the external microphone 340 may convert the acquired external sound wave into an external electrical signal. For example, the external microphone 340 may convert an external signal, which is an acoustic signal, into an external electrical signal, which is an electronic signal. For example, the external microphone 340 may include a membrane (not illustrated) and generate an external electrical signal corresponding to the vibration of the membrane due to the external signal.

According to an embodiment, the external microphone 340 may digitize the converted external electrical signal and convert it into an external PCM signal. For example, the external microphone 340 may convert the external electrical signal, which is an analog signal, into an external PCM signal, which is a digital signal. For example, the external microphone 340 may generate an external PCM signal by digitizing the external electrical signal by sampling it into a uniform interval, quantizing it into a representative value of the interval, and encoding it into a digital binary code.

According to an embodiment, the processor 320 may convert a converted external PCM signal, which is a time domain signal, into an external frequency signal, which is a frequency domain signal. For example, the processor 320 may perform a fast Fourier transform (FFT) in the converted PCM signal to generate an external frequency signal.

The internal microphone 360 according to various embodiments may be located in an area between an ear inlet and an eardrum within the external auditory canal when wearing the electronic device 300 to acquire an internal input signal. According to an embodiment, the internal input signal is a signal acquired by the internal microphone 360 and may correspond to at least a portion of a sound acquired between the electronic device 300 and an external object (e.g., eardrum). For example, the sound acquired by the internal microphone 360 may be a sound output from the speaker 350 and/or a sound output from the speaker 350 and reflected to an external object (e.g., eardrum). According to an embodiment, the internal input signal may refer to any one of an internal sound wave, an internal electrical signal, an internal PCM signal, and/or an internal frequency signal acquired by the internal microphone 460.

According to an embodiment, the internal microphone 360 may convert the acquired internal sound wave into an internal electrical signal. For example, the internal microphone 360 may convert the internal sound wave, which is an acoustic signal, into an internal electrical signal, which is an electronic signal. For example, the internal microphone 360 may include a membrane (not illustrated) and generate an internal electrical signal corresponding to the vibration of the membrane due to the internal sound wave.

According to an embodiment, the internal microphone 360 may digitize the converted internal electrical signal to convert it into an internal pulse coded modulation (PCM) signal. For example, the internal microphone 360 may convert the internal electrical signal, which is an analog signal, into an internal PCM signal, which is a digital signal. For example, the internal microphone 360 may generate an internal PCM signal by digitizing the internal electrical signal by sampling it into a uniform interval, quantizing it into a representative value of the interval, and encoding it into a digital binary code.

According to an embodiment, the processor 320 may convert the converted internal PCM signal, which is a time domain signal, into an internal frequency signal, which is a frequency domain signal. For example, the processor 320 may perform a fast Fourier transform (FFT) in the converted internal PCM signal to generate an internal frequency signal.

The memory 330 according to various embodiments may store various data (e.g., normalized least mean squares (NLMS) algorithm) for estimating a passive feature occurring according to actual wearing of the electronic device 300 based on an external input signal input through the external microphone 340 and an internal input signal input through the internal microphone 360. For example, the estimated passive feature may represent a characteristic of a signal reduced and changed while a signal input through the external microphone 340 reaches a location of the internal microphone 360. For example, the estimated passive feature may represent a filter that predicts a signal input to the internal microphone 360 based on a signal input through the external microphone 340.

The memory 330 according to various embodiments may store a reference passive feature estimated through a wearing simulation (e.g., ear simulator) of the electronic device 300 based on a signal input through the external microphone 340 and a signal input through the internal microphone 360. For example, the reference passive feature may be estimated based on NLMS with reference to a passive feature measured through a simulation.

The memory 330 according to various embodiments may store various data for identifying a target frequency response for an estimated passive feature based on a reference passive feature and designing or implementing a filter combination having the target frequency response.

The memory 330 according to various embodiments may store a learning model for deriving a final passive feature by compensating for an estimated passive feature. For example, the learning model may include a deep neural network learning model learned in advance so as to derive high frequency components of a passive feature based on low frequency components of the passive feature measured through a simulation.

The memory 330 according to various embodiments may store a learning model for deriving a frequency response of a signal changing through a path (external auditory canal) until a signal input through the external microphone 340 reaches the eardrum through a wearing simulation (e.g., ear simulator) of the electronic device 300. For example, the learning model may include a deep neural network learning model learned in advance so that a frequency response of a signal measured at an eardrum location is derived through a simulation for a signal input through the external microphone 340.

The memory 330 according to various embodiments may store filter data applied to remove noise of the internal microphone 360. For example, the stored filter data may include information on a filter applied based on, for example, NLMS in order to remove noise when various voice signals such as a call event occur.

The external microphone 340 according to various embodiments may be located in an area exposed to the outside when wearing the electronic device 300 to acquire an external input signal. According to an embodiment, the external input signal is a signal acquired by the external microphone 340 and may include at least a portion of a signal generating outside the electronic device 300. According to an embodiment, the external microphone 340 may be installed in a location exposed to the outside from the external auditory canal when the user wears the electronic device 300 on his or her ear. According to an embodiment, the external microphone 340 may acquire an external input signal corresponding to a sound acquired from the outside of the electronic device 300. For example, the sound acquired by the external microphone 340 from the outside may be a sound generating around the user while the user is wearing the electronic device 300.

The speaker 350 according to various embodiments may output a signal in a direction of the eardrum of the user inside the external auditory canal without being exposed to the outside when wearing the electronic device 300. According to an embodiment, the speaker 350 may be installed to be located between the inside of the external auditory canal and the eardrum when the electronic device 300 is worn on the ear. According to an embodiment, the speaker 350 may output an acoustic signal to the outside of the electronic device 300 based on a signal controlled by the processor 320.

The internal microphone 360 according to various embodiments may be located in an inner region of the external auditory canal when wearing the electronic device 300 to acquire an internal input signal. According to an embodiment, the internal input signal is a signal acquired by the internal microphone 360 and may include at least a portion of a signal output by the speaker 350. According to an embodiment, the internal microphone 360 may be installed to be located between the external auditory canal and the eardrum when the electronic device 300 is worn on the ear. According to an embodiment, the internal microphone 360 may acquire an internal input signal corresponding to a sound acquired between the electronic device 300 and an external object (e.g., the eardrum). For example, the sound acquired by the internal microphone 360 may be a sound output from the speaker 350 and/or a sound output from the speaker 350 and reflected to an external object.

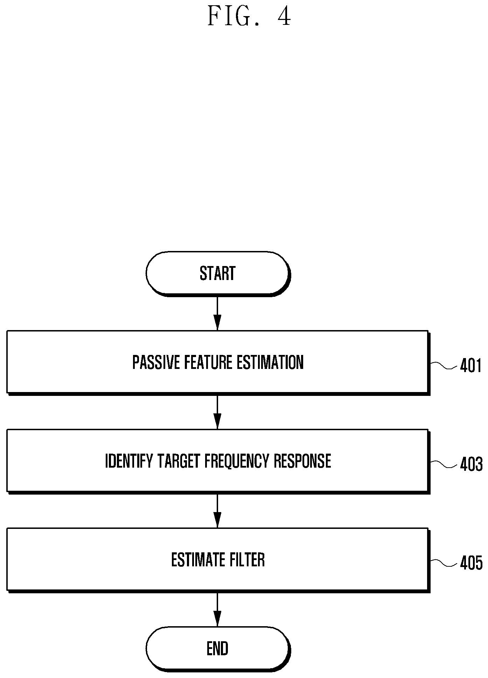

FIG. 4 is a flowchart illustrating a method of controlling a signal to be output from a speaker (e.g., the speaker 350 of FIG. 3) based on signals acquired from an external microphone (e.g., the external microphone 340 of FIG. 3) and an internal microphone (e.g., the internal microphone 360 of FIG. 3) by a processor (e.g., the processor 320 of FIG. 3) in an electronic device (e.g., the electronic device 300 of FIG. 3 or an electronic device 400 of FIG. 4) according to various embodiments disclosed in this document.

FIG. 4 is a flowchart illustrating a method of controlling a signal to be output from a speaker (e.g., the speaker 350 of FIG. 3) based on signals acquired from an external microphone (e.g., the external microphone 340 of FIG. 3) and an internal microphone (e.g., the internal microphone 360 of FIG. 3) by a processor (e.g., the processor 320 of FIG. 3) according to various embodiments disclosed in this document.

According to various embodiments, the processor 320 may control a signal output from the speaker 350 to enable a user wearing the electronic device 300 to hear external sounds in the surroundings.

According to various embodiments, in operation 401, the processor 320 may estimate a passive feature based on an external input signal acquired through the external microphone 340 and an internal input signal acquired through the internal microphone 360.

According to an embodiment, the external microphone 340 may be located in an area exposed to the outside from the ear inlet when wearing the electronic device 300 to acquire an external input signal. According to an embodiment, the external input signal is a signal acquired by the external microphone 340 and may correspond to at least a portion of a sound generating outside the electronic device 300.

The internal microphone 360 according to various embodiments may be located between the ear inlet and the eardrum within the external auditory canal when wearing the electronic device 300 to acquire an internal input signal. According to an embodiment, the internal input signal is a signal acquired by the internal microphone 360.

According to an embodiment, operation 401 may be performed, for example, in a situation where no signal is output by the speaker 350 and/or a situation where the user does not speak. To this end, for example, the electronic device 300 may identify whether the speaker 350 outputs. For example, the electronic device 300 may identify whether the user speaks using voice activity detection (VAD) technology for a signal input through the internal microphone 360. For example, in the case that the electronic device 300 is equipped with a voice pickup unit (VPU), the electronic device 300 may identify whether the user speaks using the VPU.

According to various embodiments, the processor 320 may estimate a passive feature according to the wearing of the electronic device 300 based on an external input signal acquired through the external microphone 340 and an internal input signal acquired through the internal microphone 360. Here, the passive feature may mean how much an external sound is attenuated and introduced into the external auditory canal. For example, the passive feature may be estimated based on the relationship (e.g., magnitude difference) between the external input signal acquired through the external microphone 340 and the internal input signal acquired through the internal microphone 360. For example, the passive feature may be estimated using a normalized least mean squares (NLMS) algorithm, but embodiments are not limited thereto.

According to various embodiments, in operation 403, the processor 320 may identify a target frequency response from the estimated passive feature with reference to the reference passive feature. According to an embodiment, the processor 320 may identify a gain difference between the estimated passive feature and the reference passive feature and identify a target frequency response based on the difference. For example, the reference passive feature may include a passive feature measured through a simulation (e.g., ear simulator).

According to various embodiments, in operation 405, the processor 320 may estimate a filter based on the target frequency response. According to an embodiment, the estimated filter may be implemented by combining one or more finite impulse response/infinite impulse response (fir/iir) filters so as to have the target frequency response. For example, the implemented filter combination may be stored in a memory (e.g., the memory 330 of FIG. 3). For example, an audio equalizer (EQ) value configured according to the implemented filter combination may be stored in the memory 330.

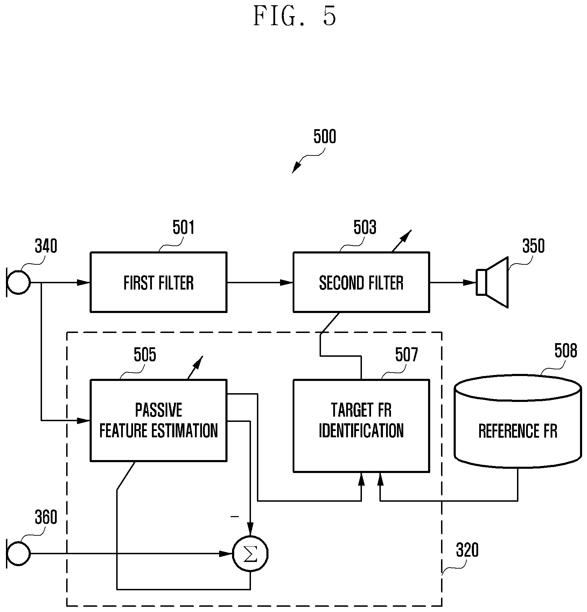

FIG. 5 is a diagram illustrating an example of signal flow and a constitution of an electronic device for external signal transmission according to various embodiments.

An electronic device 500 (e.g., the electronic device 300 of FIG. 3) according to various embodiments may include an external microphone 340, a processor 320, a memory 330, a speaker 350, and/or an internal microphone 360.

According to an embodiment, the external microphone 340 may be located in an area exposed to the outside from the ear inlet when wearing the electronic device 300 to acquire an external input signal. According to an embodiment, the external input signal is a signal acquired by the external microphone 340 and may include at least a portion of a sound generating outside the electronic device 300.

The internal microphone 360 according to various embodiments may be located between the ear inlet and the eardrum within an external auditory canal when wearing the electronic device 300 to acquire an internal input signal. According to an embodiment, the internal input signal is a signal acquired by the internal microphone 360.

According to an embodiment, a first filter 501 may include a filter designed by a simulation (e.g., ear simulator). For example, the first filter 501 may include a filter (fixed filter) having fixed filter coefficients. For example, the first filter 501 may include a filter designed based on a passive performance in an open state measured between the eardrum and the ear inlet of the simulator.

According to an embodiment, the electronic device 500 may be mounted on the ear simulator to measure passive features based on NLMS, and the first filter 501 may be tuned so that an active characteristic becomes a target frequency response with reference to the measured frequency response. For example, tuning of the first filter 501 may be performed during the manufacturing stage of the electronic device 500.

According to an embodiment, the reference passive feature Hi_ref(f) may be estimated based on NLMS in a state in which the electronic device 500 is mounted on the ear simulator and stored in the memory 330.

According to an embodiment, a passive feature estimation block 505 may estimate the passive feature Hi(f) according to the wearing of the electronic device 300 based on an external input signal acquired through the external microphone 340 and an internal input signal acquired through the internal microphone 360. Here, the passive feature may mean how much an external sound is attenuated and introduced into the external auditory canal. For example, the passive feature may be estimated based on the relationship (e.g., magnitude difference) between the external input signal acquired through the external microphone 340 and the internal input signal acquired through the internal microphone 360. For example, the passive feature may be estimated using a normalized least mean squares (NLMS) algorithm, but embodiments are not limited thereto.

According to an embodiment, the passive feature estimation block 505 may be operated in a situation where no signal is output by the speaker 350 and/or a situation where the user does not speak.

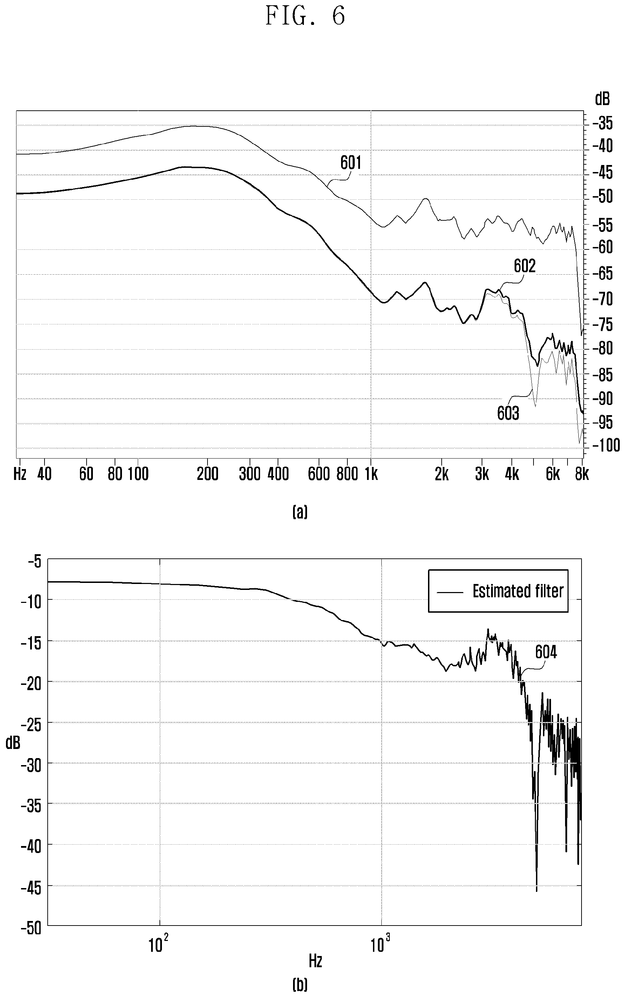

FIG. 6 is a graph illustrating signals input through microphones of an electronic device and signal characteristics estimated based thereon and estimated filters according to various embodiments.

With reference to a graph a of FIG. 6, an internal input signal 603 estimated from an external input signal may be represented based on a characteristic 601 of an external input signal acquired through an external microphone 340 and a characteristic 602 of an internal input signal acquired through an internal microphone 360.

According to an embodiment, it is possible to model how much the internal input signal input to the internal microphone 360 is reduced relative to the external input signal input to the external microphone 340, and a filter 604 may be estimated, as illustrated in a graph b based on this.

According to an embodiment, a relationship such as Equation 1 may be established between an external input signal X(f,t) acquired through the external microphone 340, an internal input signal Y(f,t) input through the internal microphone 360, and a filter H(f,t) that predicts the internal input signal Y(f,t) for the external input signal X(f,t).

[Equation 1]

$$E(f,t)=Y(f,t)-X(f,t)H(f,t)$$

Here, it is possible to model a converged filter H(f,t) representing how much the internal input signal is reduced compared to the external input signal by minimizing E(f,t) by applying NLMS.

According to an embodiment, a passive feature estimated by the passive feature estimation block 505 may be affected by various environmental changes occurring when the electronic device 500 is worn by an individual user, such as characteristics of the user's external auditory canal, a wearing state (e.g., including a tight or loose state), or a size of the eartip.

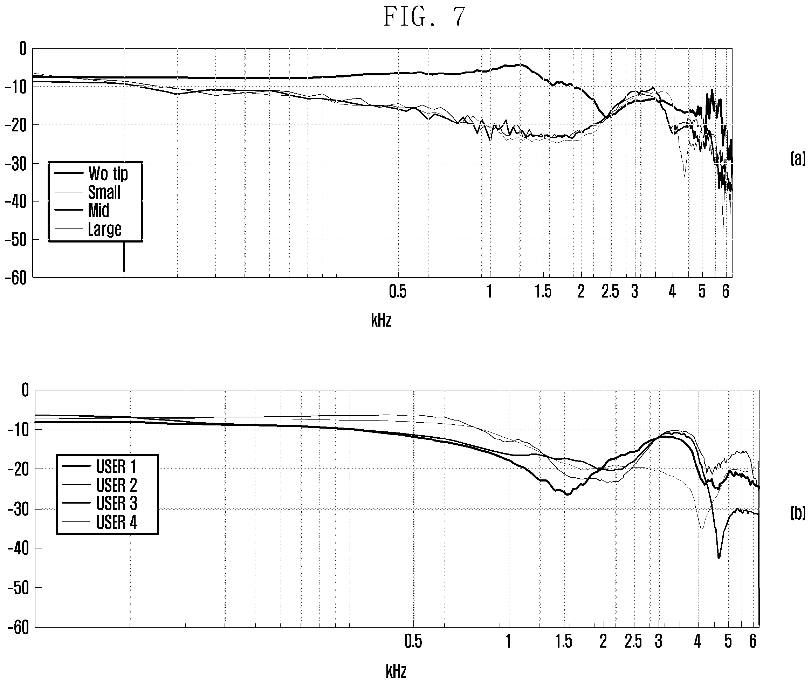

FIG. 7 is a graph illustrating differences in passive features estimated by signals input through microphones according to various variables occurring when wearing an electronic device (e.g., the electronic device 300 or 500 of FIG. 3 or 5) according to various embodiments.

According to an embodiment, with reference to a graph a, it may be seen that passive features estimated by signals input through microphones change according to a type and/or size of an eartip applied for wearing the electronic device.

According to an embodiment, with reference to a graph b, it may be seen that passive features estimated by signals input through microphones change according to characteristics (e.g., characteristics of the external auditory canal) of the user wearing the electronic device.

According to various embodiments, a target frequency response identification block 507 may identify a target frequency response from the estimated passive feature with reference to a reference passive feature 508. According to an embodiment, the target frequency response identification block 507 may identify a gain difference T(f) between an estimated passive feature Hi(f) and a reference passive feature Hi(f) and identify a target frequency response based on the gain difference T(f). For example, the target frequency response may include 1/T(f).

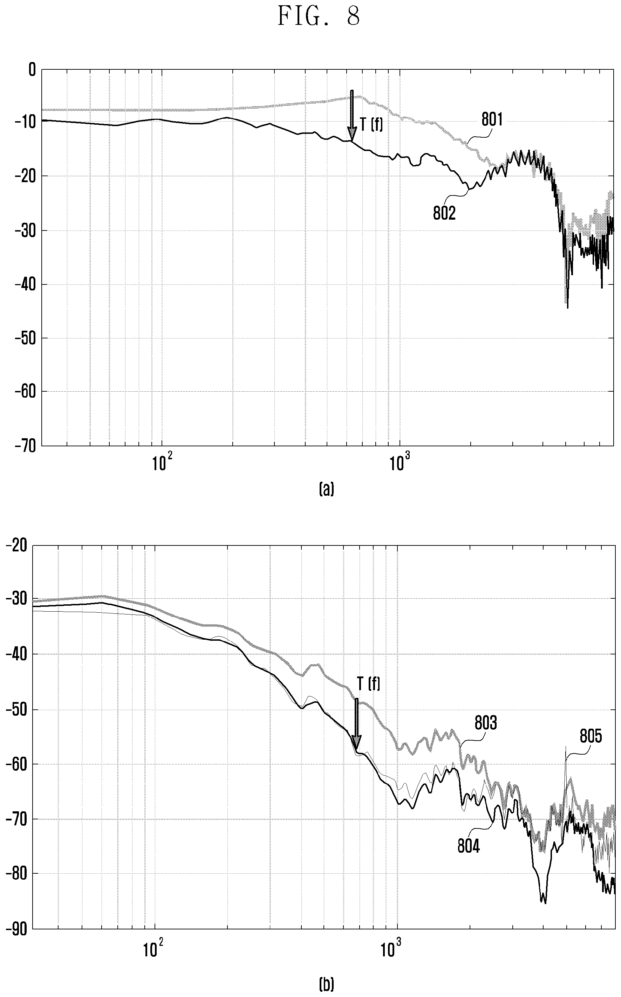

FIG. 8 is a graph illustrating estimated signal characteristics based on signals input through microphones and deviations based on a reference signal characteristic when wearing an electronic device according to various embodiments.

According to an embodiment, with reference to graphs a and b, it may be seen that deviations (e.g., different eartip sizes/types) according to various variables may be compensated according to an identified target frequency response by applying a reference passive feature to estimated passive features based on signals input through microphones in a state of wearing an electronic device (e.g., the electronic device 300 or 500 of FIG. 3 or 5). For example, in a graph a, an estimated passive feature 801 for a small eartip may be different from an estimated passive feature 802 for a mid eartip.

According to an embodiment, an identified frequency response by applying the reference passive feature to the estimated passive feature 801 for the small eartip may be approached to the estimated frequency response by applying the reference passive feature to the estimated passive feature 802 for the mid eartip.

According to an embodiment, with reference to the graph b, by applying and correcting a reference frequency response to a measured frequency response 803 for a small eartip in a state of wearing an electronic device, the frequency response 803 may be approached to an estimated frequency response 805 by applying the reference passive feature to a frequency response 804 according to a measured passive feature for a mid eartip.

According to an embodiment, a second filter 503 may be implemented by estimating based on the target frequency response. According to an embodiment, the second filter 503 may be a variable filter. According to an embodiment, the second filter 503 may be implemented by combining one or more finite impulse response/infinite impulse response (fir/iir) filters having the target frequency response. For example, filter coefficients may be calculated by performing inverse fast Fourier transform (IFT) in the target frequency response. For example, filter coefficients may be implemented by combining a plurality of biquad filters.

According to an embodiment, external sound acquired through the external microphone 340 may be filtered through the first filter 501 and the second filter 503 to be output through the speaker 350.

With reference again to FIG. 5, the passive feature estimation module 505 and the target frequency response identification module 507 may be implemented to operate as functional modules of the processor 320. For example, a reference frequency response 508 may be stored in the memory 330.

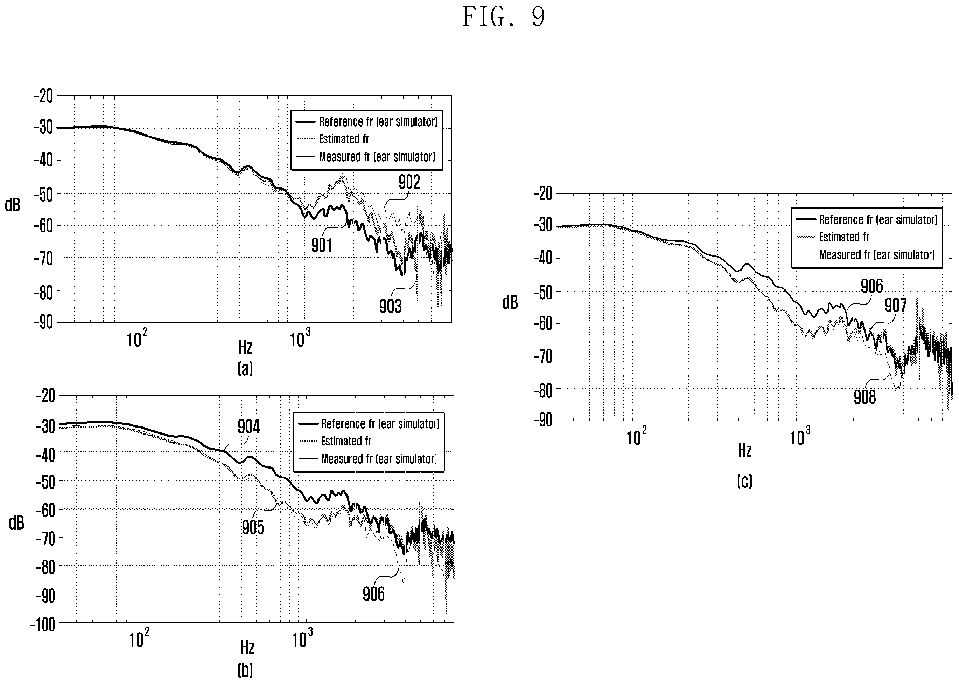

FIG. 9 is a graph illustrating a signal characteristic estimated based on a signal input through microphones and a deviation based on a reference signal characteristic when wearing an electronic device (e.g., the electronic device 300 or 500 of FIG. 3 or 5) according to various embodiments. With reference to the illustrated graphs, it may be seen that a frequency response estimated by correction based on a reference frequency response when wearing an electronic device is similar to a frequency response measured by a simulation when not wearing the electronic device according to various embodiments.

With reference to a graph a, it may be seen that a frequency response 902 estimated as a result corrected based on a reference frequency response 901 stored based on the simulation is similar to a frequency response 903 measured by a simulation according to various embodiments.

With reference to a graph b, it may be seen that a frequency response 905 estimated by correction based on a reference frequency response 904 stored based on a simulation is similar to a frequency response 906 measured by a simulation according to various embodiments.

With reference to a graph c, it may be seen that a frequency response 907 estimated by correction based on the reference frequency response 906 stored based on a simulation is similar to a frequency response 908 measured by a simulation according to various embodiments.

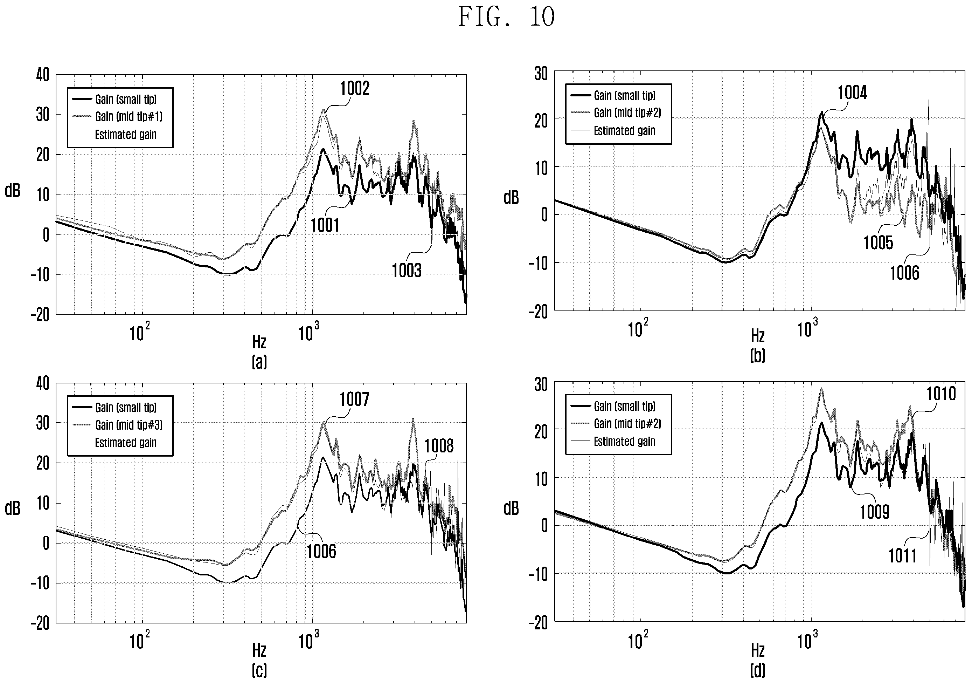

FIG. 10 is a graph illustrating a signal characteristic estimated based on a signal input through microphones and a deviation compensated based on a reference signal characteristic when wearing an electronic device (e.g., the electronic device 300 or 500 of FIG. 3 or 5) according to various embodiments.

With reference to a graph a of FIG. 10, it may be seen that a gain 1003 for a frequency response estimated based on a reference signal characteristic with respect to a gain 1001 for a frequency response measured when a small eartip is applied is similar to a gain 1002 for a frequency response measured when a mid eartip is applied.

With reference to a graph b of FIG. 10, it may be seen that a gain 1006 for a frequency response estimated based on a reference signal characteristic with respect to a gain 1004 for a frequency response measured when a small eartip is applied is similar to a gain 1005 for a frequency response measured when a mid eartip is applied.

With reference to a graph c of FIG. 10, it may be seen that a gain 1009 for a frequency response estimated based on a reference signal characteristic with respect to a gain 1007 for a frequency response measured when a small eartip is applied is similar to a gain 1008 for a frequency response measured when a mid eartip is applied.

With reference to a graph d of FIG. 10, it may be seen that a gain 1011 for a frequency response estimated based on a reference signal characteristic with respect to a gain 1009 for a frequency response measured when a small eartip is applied is similar to a gain 1010 for a frequency response measured when a mid eartip is applied.

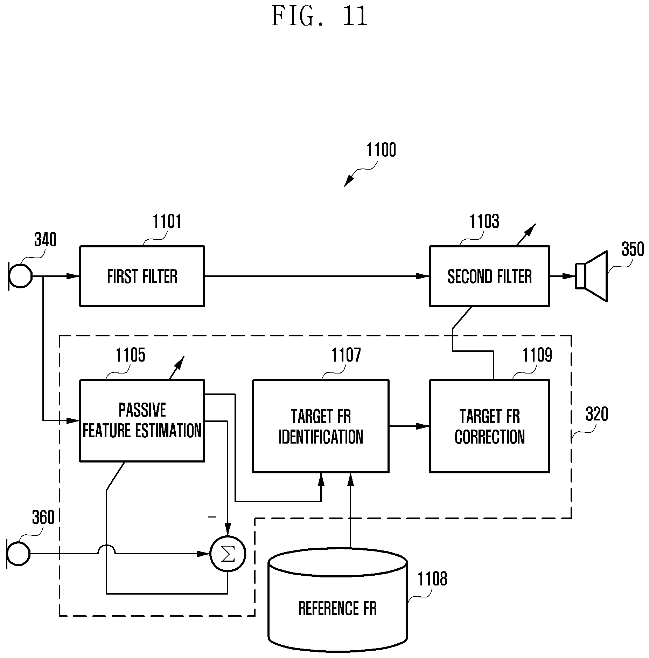

FIG. 11 is a diagram illustrating an example of signal flow and a constitution of an electronic device that filters and provides external sounds based on signals input through microphones when wearing the electronic device according to various embodiments.

An electronic device 1100 (e.g., the electronic device 300 of FIG. 3 or the electronic device 500 of FIG. 5) according to various embodiments may include an external microphone 340, a processor 320, a memory 330, a speaker 350, and/or an internal microphone 360. Hereinafter, in the description of an operation of the electronic device 1100, a detailed description of an operation identical or similar to the operation according to the constitution of the electronic device 300 of FIG. 3 or the electronic device 500 of FIG. 5 may be omitted.

According to an embodiment, the external microphone 340 may be located in an area exposed to the outside from the ear inlet when wearing the electronic device 1100 to acquire an external input signal. According to an embodiment, the external input signal is a signal acquired by the external microphone 340 and may include at least a portion of a sound generating outside the electronic device 300.

The internal microphone 360 according to various embodiments may be located between the ear inlet and the eardrum within the external auditory canal when wearing the electronic device 1100 to acquire an internal input signal. According to an embodiment, the internal input signal is a signal acquired by the internal microphone 360.

According to an embodiment, a first filter 1101 may include a filter designed by a simulation (e.g., ear simulator). For example, the first filter 1101 may include a filter (fixed filter) having fixed filter coefficients. For example, the first filter 1101 may include a filter designed based on a passive performance in an open state measured between the eardrum and the ear inlet of the simulator.

According to an embodiment, the electronic device 1100 may be mounted on the ear simulator to measure a passive feature based on NLMS, and the first filter 1101 may be tuned so that an active characteristic becomes a target frequency response with reference to the measured frequency response. For example, tuning of the first filter 1101 may be performed during the manufacturing stage of the electronic device 1100.

According to an embodiment, a passive feature estimation block 1105 may estimate the passive feature according to the wearing of the electronic device 300 based on an external input signal acquired through the external microphone 340 and an internal input signal acquired through the internal microphone 360. Here, the passive feature may mean how much an external sound is attenuated and introduced into the external auditory canal. For example, the passive feature may be estimated based on the relationship (e.g., magnitude difference) between the external input signal acquired through the external microphone 340 and the internal input signal acquired through the internal microphone 360. For example, the passive feature may be estimated using a normalized least mean squares (NLMS) algorithm, but embodiments are not limited thereto.

According to an embodiment, the passive feature estimation block 1105 may be operated in a situation where no signal is output by the speaker 350 and/or a situation where the user does not speak.

According to an embodiment, a passive feature estimated by the passive feature estimation block 1105 may be affected by various environmental changes occurring when the electronic device 1100 is worn by an individual user, such as characteristics of the user's external auditory canal, a wearing state (e.g., including a tight or loose state), or a size of the eartip.

According to various embodiments, a target frequency response identification block 1107 may identify a target frequency response from the estimated passive feature with reference to a reference frequency response 1108.

According to an embodiment, for a signal input through the external microphone 340, the memory 330 may store a learning model for estimating a high frequency component of a passive feature based on the magnitude of a low frequency component of a passive feature estimated through a wearing simulation (e.g., ear simulator) of the electronic device 300 to further correct a high frequency component of a target frequency response. For example, the learning model may include a deep neural network learning model learned to estimate a passive feature for a signal input through the external microphone 340 in the ear simulator, and to estimate a high frequency component of the passive feature by inputting the magnitude of a low frequency component of the estimated passive feature and targeting a high frequency component of the passive feature measured in the ear simulator.

According to an embodiment, a target frequency response correction module 1109 may correct the target frequency response based on a learning model stored in the memory 330.

According to an embodiment, a second filter 1103 may be implemented by estimating based on the corrected target frequency response. According to an embodiment, the second filter 1103 may be a variable filter. According to an embodiment, the second filter 1103 may be implemented by combining one or more finite impulse response/infinite impulse response (fir/iir) filters having a target frequency response. For example, filter coefficients may be calculated by performing inverse fast Fourier transform (IFT) in the target frequency response. For example, filter coefficients may be implemented by combining a plurality of biquad filters.

According to an embodiment, external sound acquired through the external microphone 340 may be compensated through the first filter 1101 and the second filter 1103 to be output through the speaker 350.

With reference again to FIG. 11, the passive feature estimation module 1105, the target frequency response identification module 1107, and the target frequency response correction module 1109 may be implemented to operate as functional modules of the processor 320. The learning model for the reference frequency response 1108 and/or the target frequency response correction may be stored in the memory 330.

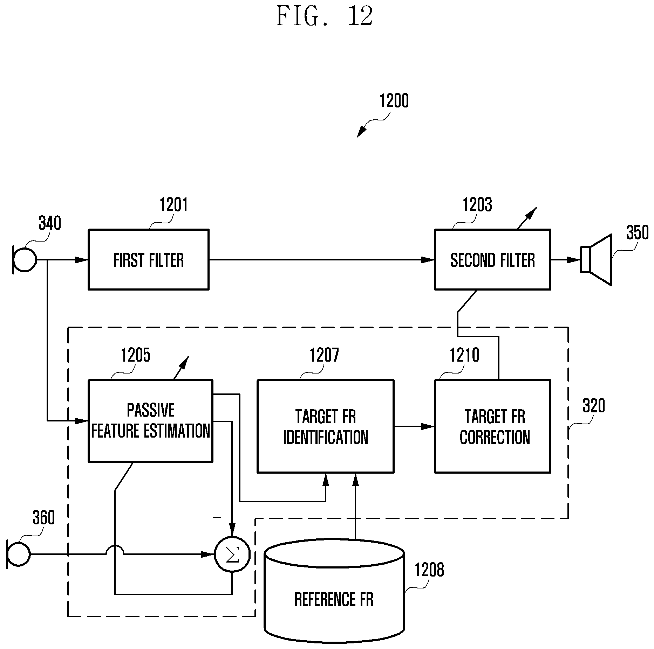

FIG. 12 is a diagram illustrating an example of signal flow and a constitution of an electronic device that filters and provides external sounds based on signals input through microphones when wearing the electronic device according to various embodiments.

An electronic device 1200 (e.g., the electronic device 300 of FIG. 3) according to various embodiments may include an external microphone 340, a processor 320, a memory 330, a speaker 350, and/or an internal microphone 360. Hereinafter, in the description of an operation of the electronic device 1200, a detailed description of an operation identical or similar to an operation according to the constitution of the electronic device 300 of FIG. 3 or the electronic device 500 of FIG. 5 may be omitted.

According to an embodiment, the external microphone 340 may be located in an area exposed to the outside from the ear inlet when wearing the electronic device 1200 to acquire an external input signal. According to an embodiment, the external input signal is a signal acquired by the external microphone 340 and may include at least a portion of a sound generating outside the electronic device 300.

The internal microphone 360 according to various embodiments may be located between the ear inlet and the eardrum within the external auditory canal when wearing the electronic device 1200 to acquire an internal input signal. According to an embodiment, the internal input signal is a signal acquired by the internal microphone 360.

According to an embodiment, a first filter 1201 may include a filter designed by a simulation (e.g., ear simulator). For example, the first filter 1201 may include a filter (fixed filter) having fixed filter coefficients. For example, the first filter 1201 may include a filter designed based on a passive performance in an open state measured between the eardrum and the ear inlet of the simulator.

According to an embodiment, the electronic device 1200 may be mounted on the ear simulator to measure a passive feature based on NLMS, and the first filter 1201 may be tuned so that an active characteristic becomes a target frequency response with reference to the measured frequency response. For example, tuning of the first filter 1201 may be performed during the manufacturing stage of the electronic device 1200.

According to an embodiment, a passive feature estimation block 1205 may estimate the passive feature according to the wearing of the electronic device 300 based on an external input signal acquired through the external microphone 340 and an internal input signal acquired through the internal microphone 360. Here, the passive feature may mean how much an external sound is attenuated and introduced into the external auditory canal. For example, the passive feature may be estimated based on the relationship (e.g., magnitude difference) between the external input signal acquired through the external microphone 340 and the internal input signal acquired through the internal microphone 360. For example, the passive feature may be estimated using a normalized least mean squares (NLMS) algorithm, but embodiments are not limited thereto.

According to an embodiment, the passive feature estimation block 1205 may be operated in a situation where no signal is output by the speaker 350 and/or a situation where the user does not speak.

According to an embodiment, a passive feature estimated by the passive feature estimation block 1205 may be affected by various environmental changes occurring when the electronic device 1200 is worn by an individual user, such as characteristics of the user's external auditory canal, a wearing state (e.g., including a tight or loose state), and a size of the eartip.

According to various embodiments, a target frequency response identification block 1207 may identify a target frequency response from the estimated passive features with reference to a reference frequency response 1208.

According to an embodiment, the memory 330 may store a learning model for deriving a frequency response of a signal changing through a path (external auditory canal) until a signal input through the external microphone 340 reaches the eardrum through a wearing simulation (e.g., ear simulator) of the electronic device 300. For example, the learning model may include a deep neural network learning model learned to estimate a passive feature of a signal input through the external microphone 340 in consideration of a signal input through the internal microphone 360 and to derive a frequency response of a signal measured at an eardrum location through a simulation.

According to an embodiment, a target frequency response correction module 1210 may correct the target frequency response based on a learning model stored in the memory 330.

According to an embodiment, a second filter 1203 may be implemented by estimating based on the corrected target frequency response. According to an embodiment, the second filter 1203 may be a variable filter. According to an embodiment, the second filter 1203 may be implemented by combining one or more finite impulse response/infinite impulse response (fir/iir) filters having a target frequency response. For example, filter coefficients may be calculated by performing inverse fast Fourier transform (IFFT) in the target frequency response. For example, filter coefficients may be implemented by combining a plurality of biquad filters.

According to an embodiment, external sound acquired through the external microphone 340 may be compensated through the first filter 1201 and the second filter 1203 to be output through the speaker 350.

With reference again to FIG. 12, the passive feature estimation module 1205, the target frequency response identification module 1207, and a target frequency response correction module 1210 may be implemented to operate as functional modules of the processor 320. The learning model for the reference frequency response 1208 and/or the target frequency response correction may be stored in the memory 330.

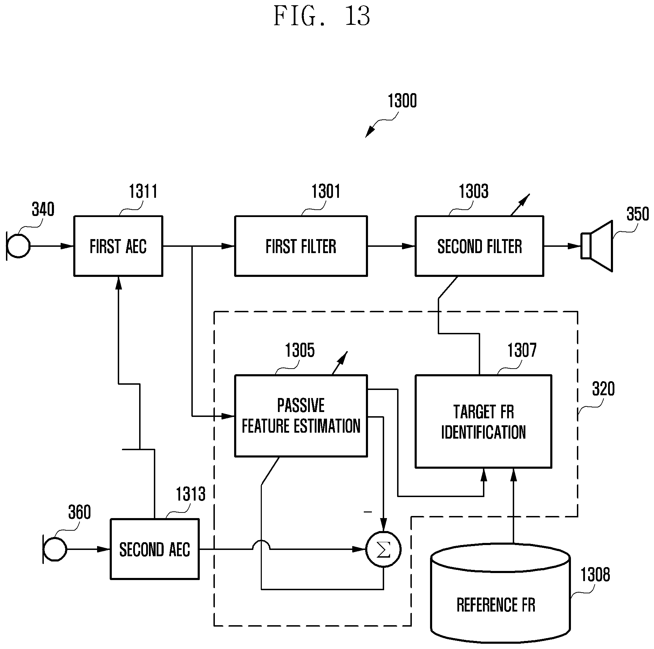

FIG. 13 is a diagram illustrating an example of signal flow and a constitution of an electronic device that filters and provides external sounds based on signals input through microphones when wearing the electronic device according to various embodiments.

An electronic device 1300 (e.g., the electronic device 300 of FIG. 3) according to various embodiments may include an external microphone 340, a processor 320, a memory 330, a speaker 350, and/or an internal microphone 360. The electronic device 1300 according to an embodiment may further include a first acoustic echo canceller (AEC) 1311 and a second AEC 1313 at the rear end of the external microphone 340 and the internal microphone 360. Hereinafter, in the description of an operation of the electronic device 1300, a detailed description of an operation identical or similar to an operation according to the constitution of the electronic device 300 of FIG. 3 or the electronic device 500 of FIG. 5 may be omitted.

According to an embodiment, the external microphone 340 may be located in an area exposed to the outside from the ear inlet when wearing the electronic device 1300 to acquire an external input signal. According to an embodiment, the external input signal is a signal acquired by the external microphone 340 and may include at least a portion of a sound generating outside the electronic device 300.

The internal microphone 360 according to various embodiments may be located between the ear inlet and the eardrum within the external auditory canal when wearing the electronic device 1300 to acquire an internal input signal. According to an embodiment, the internal input signal is a signal acquired by the internal microphone 360.

The first AEC 1311 and the second AEC 1313 that may be applied to the rear end of the external microphone 340 and the internal microphone 360 according to an embodiment may remove, for example, a signal output through the speaker 350 and/or noise input according to a user's speech from a signal input through the external microphone 340 and the internal microphone 360. Accordingly, the electronic device 1300 may operate to filter external sounds and provide them to the speaker 350 even in a signal output situation and/or a user's speech situation through the speaker 350. For example, the first AEC 1311 may be implemented inside the external microphone 340. For example, the second AEC 1313 may be implemented inside the internal microphone 360.

According to an embodiment, a first filter 1301 may include a filter designed by a simulation (e.g., ear simulator). For example, the first filter 1301 may include a filter (fixed filter) having fixed filter coefficients. For example, the first filter 1301 may include a filter designed based on a passive performance in an open state measured between the eardrum and the ear inlet of the simulator.

According to an embodiment, the electronic device 1300 may be mounted on the ear simulator to measure a passive feature based on NLMS, and the first filter 1301 may be tuned so that an active characteristic becomes a target frequency response with reference to the measured frequency response. For example, tuning of the first filter 1301 may be performed during the manufacturing stage of the electronic device 1300.

According to an embodiment, a passive feature estimation block 1305 may estimate the passive feature according to the wearing of the electronic device 300 based on an external input signal acquired through the external microphone 340 and an internal input signal acquired through the internal microphone 360. Here, the passive feature may mean how much an external sound is attenuated and introduced into the external auditory canal. For example, the passive feature may be estimated based on the relationship (e.g., magnitude difference) between the external input signal acquired through the external microphone 340 and the internal input signal acquired through the internal microphone 360. For example, the passive feature may be estimated using a normalized least mean squares (NLMS) algorithm, but embodiments are not limited thereto.

According to an embodiment, the passive feature estimation block 1305 may be performed in a situation where no signal is output by the speaker 350 and/or a situation where the user does not speak.

According to an embodiment, a passive feature estimated by the passive feature estimation block 1305 may be affected by various environmental changes occurring when the electronic device 1300 is worn by an individual user, such as characteristics of the user's external auditory canal, a wearing state (e.g., including a tight or loose state), and a size of the eartip.

According to various embodiments, a target frequency response identification block 1307 may identify a target frequency response from the estimated passive feature with reference to a reference frequency response 1308.

According to an embodiment, a second filter 1303 may be implemented by estimating based on the identified target frequency response. According to an embodiment, the second filter 1303 may be a variable filter. According to an embodiment, the second filter 1303 may be implemented by combining one or more finite impulse response/infinite impulse response (fir/iir) filters having target frequency responses. For example, filter coefficients may be calculated by performing inverse fast Fourier transform (IFFT) in the target frequency response. For example, filter coefficients may be implemented by combining a plurality of biquad filters.

According to an embodiment, external sound acquired through the external microphone 340 may be compensated through the first filter 1301 and the second filter 1303 to be output through the speaker 350.

With reference again to FIG. 13, the passive feature estimation module 1305 and the target frequency response identification module 1307 may be implemented to operate as functional modules of the processor 320. The reference frequency response 1308 may be stored in the memory 330.

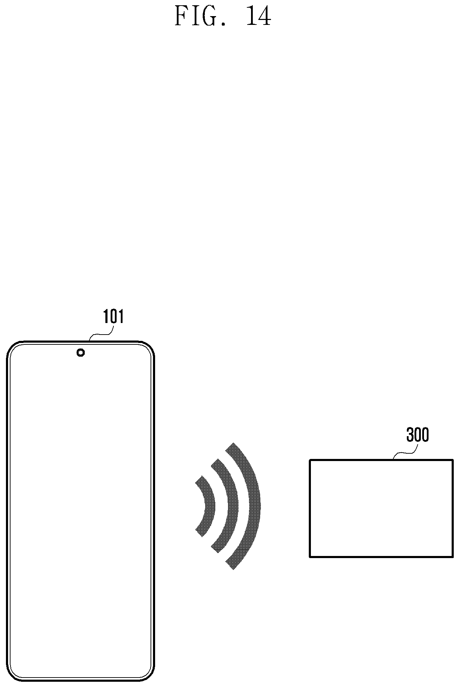

FIG. 14 is a diagram illustrating an example of learning a method of filtering and providing external sounds based on signals input through microphones of an electronic device (e.g., the electronic device 300 of FIG. 3) according to a simulation according to various embodiments.

According to an embodiment, it is possible to learn a method of generating various sounds through an external electronic device (e.g., the electronic device 101 of FIG. 1) and filtering and providing external sounds of the electronic device 300 according to various embodiments based on the generated sounds.

According to an embodiment, an external electronic device 101 may receive an external sound provision function learning command of the electronic device 300 through a display (e.g., the display module 160 of FIG. 1).

According to an embodiment, the external electronic device 101 may generate and output a test signal using an audio module (e.g., the audio module 170 of FIG. 1 or 2) and/or a sound output module (e.g., the sound output module 155 of FIG. 1).

According to an embodiment, the electronic device 300 may repeatedly perform operations of estimating passive features, identifying a target frequency response, and/or constituting a variable filter (e.g., the second filter 503, 1103, 1203, or 1303 of FIG. 5, 11, 12, or 13) for microphone input signals according to the above description based on various test signals output from the external electronic device 101, thereby enabling to update and learn filter coefficients of the variable filter.

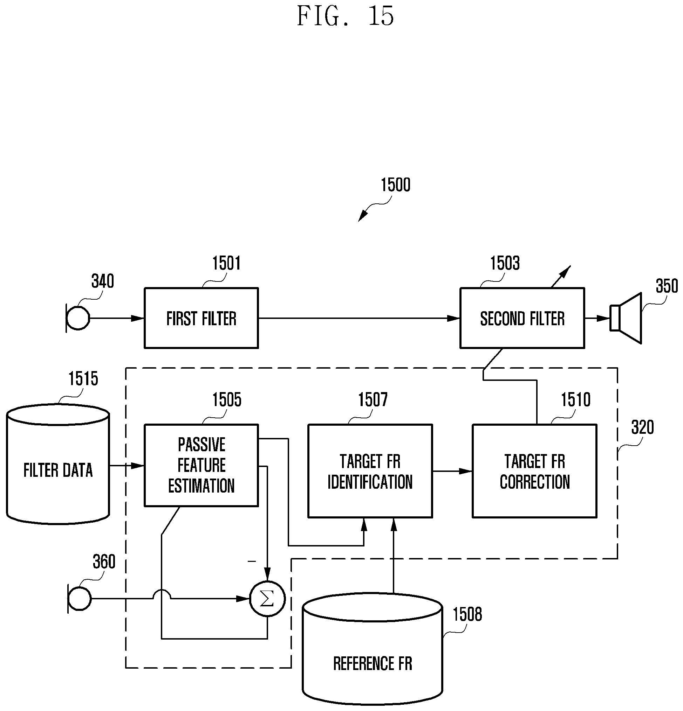

FIG. 15 is a diagram illustrating an example of signal flow and a constitution of an electronic device that filters and provides external sounds based on signals input through microphones when wearing the electronic device according to various embodiments.

An electronic device 1500 (e.g., the electronic device 300 of FIG. 3) according to various embodiments may include an external microphone 340, a processor 320, a memory 330, a speaker 350, and/or an internal microphone 360. Hereinafter, in the description of an operation of the electronic device 1500, a detailed description of an operation identical or similar to an operation according to the constitution of the electronic device 300 of FIG. 3 or the electronic device 500 of FIG. 5 may be omitted.

According to an embodiment, the external microphone 340 may be located in an area exposed to the outside from the ear inlet when wearing the electronic device 1500 to acquire an external input signal. According to an embodiment, the external input signal is a signal acquired by the external microphone 340 and may include at least a portion of a sound generating outside the electronic device 300.

The internal microphone 360 according to various embodiments may be located between the ear inlet and the eardrum within the external auditory canal when wearing the electronic device 1500 to acquire an internal input signal. According to an embodiment, the internal input signal is a signal acquired by the internal microphone 360.

According to an embodiment, a first filter 1501 may include a filter designed by a simulation (e.g., ear simulator). For example, the first filter 1501 may include a filter (fixed filter) having fixed filter coefficients. For example, the first filter 1501 may include a filter designed based on the measured passive performance of an open state between the eardrum and the ear inlet of the simulator.

According to an embodiment, the electronic device 1500 may be mounted on the ear simulator to measure passive features based on NLMS, and the first filter 1501 may be tuned so that an active characteristic becomes a target frequency response with reference to the measured frequency response. For example, tuning of the first filter 1501 may be performed during the manufacturing stage of the electronic device 1500.

According to an embodiment, a passive feature estimation block 1505 may estimate the passive feature according to the wearing of the electronic device 300 based on an external input signal acquired through the external microphone 340 and an internal input signal acquired through the internal microphone 360. Here, the passive feature may mean how much an external sound is attenuated and introduced into the external auditory canal. For example, the passive feature may be estimated based on the relationship (e.g., magnitude difference) between the external input signal acquired through the external microphone 340 and the internal input signal acquired through the internal microphone 360. For example, the passive feature may be estimated using a normalized least mean squares (NLMS) algorithm, but embodiments are not limited thereto.

According to an embodiment, the passive feature estimation block 1505 may estimate the passive feature by additionally referring to filter data 1515 stored in the memory 330. For example, the filter data 1515 may include various filter data converged, i.e., applied and updated in order to remove noise of the internal microphone 340 according to the operation of the electronic device 1500. For example, the filter data 1515 may include filter data converged according to a voice call solution including an NLMS-based filter (e.g., adaptive filter) operating in order to remove noise of the internal microphone 340 when a call is performed in the electronic device 1500.

According to an embodiment, the passive feature estimation block 1505 may be performed in a situation where no signal is output by the speaker 350 and/or a situation where the user does not speak.

According to an embodiment, a passive feature estimated by the passive feature estimation block 1505 may be affected by various environmental changes occurring when the electronic device 1500 is worn by an individual user, such as characteristics of the user's external auditory canal, a wearing state (e.g., including a tight or loose state), or a size of the eartip.

According to various embodiments, a target frequency response identification block 1507 may identify a target frequency response from the estimated passive feature with reference to a reference frequency response 1508.

According to an embodiment, the memory 330 may store a learning model for deriving a frequency response of a signal changing through a path (external auditory canal) until a signal input through the external microphone 340 reaches the ear drum through a wearing simulation (e.g., ear simulator) of the electronic device 300. For example, the learning model may include a deep neural network learning model learned to estimate a passive feature for a signal input through the external microphone 340 and to derive a frequency response of a signal measured at an eardrum location through a simulation.

According to an embodiment, a target frequency response correction module 1510 may correct the target frequency response based on a learning model stored in the memory 330.

According to an embodiment, a second filter 1503 may be implemented by estimating based on the corrected target frequency response. According to an embodiment, the second filter 1503 may be a variable filter. According to an embodiment, the second filter 1503 may be implemented by combining one or more finite impulse response/infinite impulse response (fir/iir) filters having a target frequency response. For example, filter coefficients may be calculated by performing inverse fast Fourier transform (IFFT) in the target frequency response. For example, filter coefficients may be implemented by combining a plurality of biquad filters.

According to an embodiment, external sound acquired through the external microphone 340 may be compensated through the first filter 1501 and the second filter 1503 to be output through the speaker 350.

With reference again to FIG. 15, the passive feature estimation module 1505, the target frequency response identification module 1507, and the target frequency response correction module 1510 may be implemented to operate as functional modules of the processor 320. The learning model for the reference frequency response 1508 and/or the target frequency response correction may be stored in the memory 330.

According to various embodiments, an electronic device (e.g., the electronic device 101 of FIG. 1, the electronic device 300, 500, 1100, 1200, 1300, or 1500 of FIG. 3, 5, 11, 12, 13, or 15) may include a speaker (e.g., the speaker 350 of FIG. 3), an external microphone (e.g., the external microphone 340 of FIG. 3), an internal microphone (e.g., the internal microphone 360 of FIG. 3), a first filter (e.g., the first filter 501, 1101, 1201, 1301, or 1501 of FIG. 5, 11, 12, 13, or 15), a second filter (e.g., the second filter 503, 1103, 1203, 1303, 1503 of FIG. 5, 11, 12, 13, or 15), a processor (e.g., the processor 120 or 320 of FIG. 1 or 3) operatively connected to the speaker, the external microphone and the internal microphone, wherein the processor may be configured to control to estimate a passive feature based on a signal acquired through the external microphone and a signal acquired through the internal microphone, to identify a target frequency response for the estimated passive feature based on a reference passive feature, to implement the second filter based on the identified target frequency response, and to sequentially filter a signal input through the external microphone through the first filter and the second filter to output the signal through the speaker.

According to various embodiments, the processor may be configured to estimate the passive feature in the case that no signal is output through the speaker and that the user wearing the electronic device does not speak.

According to various embodiments, the processor may be configured to estimate the passive feature based on a normalized least mean squares (NLMS) algorithm.

According to various embodiments, the first filter may be implemented by a simulation in a non-wearing state of the electronic device, and the second filter may be implemented based on the identified frequency response by estimating the passive feature in a wearing state of the electronic device.

According to various embodiments, the second filter may be configured by combining one or more finite impulse response or infinite impulse response (fir or iir) filters having the target frequency response.

According to various embodiments, the processor may be configured to learn by updating a constitution of the second filter based on various signals output from an external electronic device.

According to various embodiments, the electronic device may further include a memory storing the reference passive feature, wherein the reference passive feature may be estimated based on a simulation to be stored in the memory.

According to various embodiments, the memory may store a learning model for additionally correcting a high frequency component of the target frequency response by estimating a high frequency component of the passive feature based on a magnitude of a low frequency component of the passive feature estimated through a simulation, and the processor may be configured to correct the target frequency response based on the learning model.

According to various embodiments, the memory may store a learning model learned so that a frequency response changing through an external auditory canal is derived until a signal input through the external microphone reaches an eardrum location through a simulation, and the processor may be configured to correct the target frequency response based on the learning model.

According to various embodiments, the electronic device may further include a first acoustic echo canceller (AEC) connected to the external microphone and a second AEC connected to the internal microphone, wherein the processor may control the first AEC and the second AEC to remove noise input according to a signal output through the speaker or a speech of a user wearing the electronic device.

According to various embodiments, a method of operating an electronic device (e.g., the electronic device 101 of FIG. 1, the electronic device 300, 500, 1100, 1200 or 1300 of FIG. 3, 5, 11, 12, or 13) may include estimating a passive feature based on a signal acquired through an external microphone (e.g., the external microphone 340 of FIG. 3) of the electronic device and a signal acquired through an internal microphone of the electronic device; identifying a target frequency response for the estimated passive feature based on a reference passive feature; and filtering a signal input through the external microphone through a first filter (e.g., the first filter 501, 1101, 1201 or 1301 of FIG. 5, 11, 12, or 13) and additionally filtering the signal through a second filter (e.g., the second filter 503, 1103, 1203, or 1303 of FIG. 5, 11, 12, or 13) implemented based on the identified target frequency response and outputting the signal through a speaker of the electronic device.

According to various embodiments, the passive feature estimation operation may be performed in the case that no signal is output through the speaker and that a user wearing the electronic device does not speak.

According to various embodiments, the passive feature may be estimated based on a normalized least mean squares (NLMS) algorithm.

According to various embodiments, the first filter may be designed by a simulation in a non-wearing state of the electronic device, and the second filter may be implemented according to the target frequency response identified by estimating the passive feature in a wearing state of the electronic device.

According to various embodiments, the second filter may be configured by combining one or more finite impulse response or infinite impulse response (fir or iir) filters having the target frequency response.

According to various embodiments, the method may further learning by updating a constitution of the second filter based on various signals output from an external electronic device.

According to various embodiments, the reference passive feature may be estimated based on a simulation and stored in advance.

According to various embodiments, the method may further include correcting a high frequency component of the target frequency response based on a pre-stored learning model that estimates a high frequency component of a passive feature based on the magnitude of a low frequency component of the passive feature estimated through a simulation.

According to various embodiments, the method may further include correcting the target frequency response based on a pre-stored learning model learned so that a frequency response changing through an external auditory canal is derived until a signal input through the external microphone reaches an eardrum location through a simulation.

According to various embodiments, the passive feature estimation operation may estimate the passive feature based on filter data applied to remove noise of the internal microphone in the electronic device.

It should be understood that various embodiments of this document and terms used therein are not intended to limit the technical features described in this document to specific embodiments, but include various modifications, equivalents, or substitutions of the embodiments.

In connection with the description of the drawings, like reference numerals may be used for similar or related components. The singular form of the noun corresponding to the item may include one or more of the item, unless the relevant context clearly dictates otherwise.

In this document, each of phrases such as "A or B", "at least one of A and B", "at least one of A or B", "A, B, or C", "at least one of A, B, and C", and "at least one of A, B, or C" may include any one of or all possible combinations of items listed together in the corresponding one of the phrases. Terms such as "first" or "second" may be simply used for distinguishing a corresponding component from other corresponding components, and do not limit the corresponding components in other aspects (e.g., importance or order). In the case that one (e.g., first) component is referred to as "coupled" or "connected" to another (e.g., second) component, with or without the terms "functionally" or "communicatively", it means that the one component may be connected to the other component directly (e.g., by wire), wirelessly, or through a third component.

The embodiments disclosed in this document disclosed in this specification and drawings only present a specific example in order to easily describe the technical contents according to an embodiment disclosed in this document and to help an understanding of the embodiments disclosed in this document, and they do not intend to limit the scope of the embodiments disclosed in this document. Accordingly, all changes or modifications derived from the technical idea of various embodiments disclosed in this document in addition to the embodiments disclosed herein should be interpreted as being included in the scope of various embodiments disclosed in this document.

**Claims**

1. An electronic device, comprising:

   a speaker;
   an external microphone;
   an internal microphone;
   a first filter;
   a second filter; and
   a processor operatively connected to the speaker, the external microphone, and the internal microphone,
   wherein the processor is configured to control to:

      estimate a passive feature based on a signal acquired through the external microphone and a signal acquired through the internal microphone,
      identify a target frequency response for the estimated passive feature based on a reference passive feature, and
      implement the second filter based on the identified target frequency response, and sequentially filter a signal input through the external microphone through the first filter and the second filter to output the signal through the speaker.

2. The electronic device of claim 1, wherein the processor is configured to estimate the passive feature in the case that no signal is output through the speaker and that a user wearing the electronic device does not speak.

3. The electronic device of claim 1, wherein the processor is configured to estimate the passive feature based on a normalized least mean squares (NLMS) algorithm.

4. The electronic device of claim 1, wherein the first filter is implemented by a simulation in a non-wearing state of the electronic device, and the second filter is implemented based on the frequency response identified by estimating the passive feature in a state of wearing the electronic device.

5. The electronic device of claim 4, wherein the second filter is configured by combining one or more finite impulse response (fir) or infinite impulse response (iir) filters having the target frequency response.

6. The electronic device of claim 4, wherein the processor is configured to learn by updating a constitution of the second filter based on various signals output from an external electronic device.

7. The electronic device of claim 1, further comprising a memory configured to store the reference passive feature, wherein the reference passive feature are estimated based on a simulation to be stored in the memory.

8. The electronic device of claim 7, wherein the memory is configured to store a learning model for additionally correcting a high frequency component of the target frequency response by estimating a high frequency component of the passive feature based on a magnitude of a low frequency component of the passive feature estimated through a simulation, and the processor is configured to correct the target frequency response based on the learning model.

9. The electronic device of claim 7, wherein the memory is configured to store a learning model learned so that a frequency response changing through an external auditory canal is derived until a signal input through the external microphone reaches an eardrum location through a simulation, and the processor is configured to correct the target frequency response based on the learning model.

10. The electronic device of claim 1, further comprising:

a first acoustic echo canceller (AEC) connected to the external microphone; and a second AEC connected to the internal microphone, wherein the processor is configured to control the first AEC and the second AEC to remove noise input according to a signal output through the speaker or speech of a user wearing the electronic device.

11. A method of operating an electronic device, the method comprising:

estimating a passive feature based on a signal acquired through an external microphone of the electronic device and a signal acquired through an internal microphone of the electronic device; identifying a target frequency response for the estimated passive feature based on a reference passive feature; and outputting the signal through a speaker of the electronic device by filtering a signal input through the external microphone through a first filter and further filtering the signal through a second filter implemented based on the identified target frequency response.

12. The method of claim 11, wherein the passive feature estimation operation is performed in the case that no signal is output through the speaker and that a user wearing the electronic device does not speak.

13. The method of claim 11, wherein the first filter is designed by a simulation in a non-wearing state of the electronic device, and the second filter is implemented according to the target frequency response identified by estimating the passive feature in a state of wearing the electronic device.

14. The method of claim 13, wherein the second filter is configured by combining one or more finite impulse response or infinite impulse response (fir or iir) filters having the target frequency response.

15. The method of claim 13, further comprising learning by updating a constitution of the second filter based on various signals output from an external electronic device.

# FIG. 1

ELECTRONIC DEVICE 101

- INPUT MODULE 150
- SOUND OUTPUT MODULE 155
- DISPLAY MODULE 160
- BATTERY 189
- POWER MANAGEMENT MODULE 188
- AUDIO MODULE 170
- HAPTIC MODULE 179
- SENSOR MODULE 176
- CAMERA MODULE 180

MEMORY 130
- VOLATILE MEMORY 132
- NON-VOLATILE MEMORY 134
  - INTERNAL MEMORY 136
  - EXTERNAL MEMORY 138

PROCESSOR 120
- MAIN PROCESSOR 121
- AUXILIARY PROCESSOR 123

COMMUNICATION MODULE 190
- WIRELESS COMMUNICATION MODULE 192
- WIRED COMMUNICATION MODULE 194

SUBSCRIBER IDENTIFICATION MODULE 196

ANTENNA MODULE 197

INTERFACE 177

CONNECTION TERMINAL 178

PROGRAM 140
- APPLICATION 146
- MIDDLEWARE 144
- OPERATING SYSTEM 142

100

SECOND NETWORK 199

ELECTRONIC DEVICE 104

FIRST NETWORK 198

ELECTRONIC DEVICE 102

SERVER 108

EP 4 598 053 A1

# FIG. 2

200

170

**AUDIO MODULE**

| | |
|---|---|
| 210 — AUDIO INPUT INTERFACE | AUDIO OUTPUT INTERFACE — 270 |
| 220 — AUDIO INPUT MIXER | AUDIO OUTPUT MIXER — 260 |
| 230 — ADC | DAC — 250 |

AUDIO SIGNAL PROCESSOR — 240

FIG. 3

300

340
EXTERNAL MICROPHONE

320
PROCESSOR

350
SPEAKER

330
MEMORY

360
INTERNAL MICROPHONE

# FIG. 4

```
            ┌─────────────┐
            │    START    │
            └──────┬──────┘
                   │
                   ▼
   ┌──────────────────────────────────┐
   │   PASSIVE FEATURE ESTIMATION     │─── 401
   └──────────────────┬───────────────┘
                      │
                      ▼
   ┌──────────────────────────────────┐
   │   IDENTIFY TARGET FREQUENCY RESPONSE   │─── 403
   └──────────────────┬───────────────┘
                      │
                      ▼
   ┌──────────────────────────────────┐
   │        ESTIMATE FILTER           │─── 405
   └──────────────────┬───────────────┘
                      │
                      ▼
            ┌─────────────┐
            │     END     │
            └─────────────┘
```

FIG. 5

# FIG. 6

(a)

(b)

# FIG. 7

(a)

(b)

EP 4 598 053 A1

## FIG. 8

(a)

(b)

FIG. 9

(a)

(b)

(c)

EP 4 598 053 A1

FIG. 10

EP 4 598 053 A1

FIG. 11

FIG. 12

1200

340

**1201**
FIRST FILTER

**1203**
SECOND FILTER

350

**1205**
PASSIVE FEATURE ESTIMATION

**1207**
TARGET FR IDENTIFICATION

**1210**
TARGET FR CORRECTION

320

360

Σ

**1208**
REFERENCE FR

FIG. 13

FIG. 14

# FIG. 15

1500

340 | 1501 FIRST FILTER | 1503 SECOND FILTER | 350

1515 FILTER DATA

1505 PASSIVE FEATURE ESTIMATION

1507 TARGET FR IDENTIFICATION

1510 TARGET FR CORRECTION

320

360

$\Sigma$

1508 REFERENCE FR

## INTERNATIONAL SEARCH REPORT

| International application No. |
| --- |
| **PCT/KR2023/017318** |

| A. | CLASSIFICATION OF SUBJECT MATTER |
| --- | --- |

**H04R 3/00**(2006.01)i; **H04R 3/04**(2006.01)i; **G10L 19/26**(2013.01)i; **G06N 20/00**(2019.01)i; **G06F 3/16**(2006.01)i

According to International Patent Classification (IPC) or to both national classification and IPC

| B. | FIELDS SEARCHED |
| --- | --- |

Minimum documentation searched (classification system followed by classification symbols)

H04R 3/00(2006.01); G10K 11/16(2006.01); G10L 19/26(2013.01); G10L 21/0364(2013.01); H04R 1/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 외부 소리(external sound), 마이크(microphone), 패시브(passive), 필터(filter), 보정 (compensation)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2014-0139053 A (APPLE INC.) 04 December 2014 (2014-12-04)<br>See paragraphs [0016] and [0020]; claim 1; and figures 1-8. | 1-15 |
| A | WO 2020-188250 A1 (CIRRUS LOGIC INTERNATIONAL SEMICONDUCTOR LIMITED) 24 September 2020 (2020-09-24)<br>See paragraphs [0006]-[0045]. | 1-15 |
| A | KR 10-2017-0085874 A (CHO, Sang Jeong) 25 July 2017 (2017-07-25)<br>See paragraphs [0012]-[0023]; claims 1-3; and figures 1-2. | 1-15 |
| A | US 2016-0241948 A1 (GOERTEK INC.) 18 August 2016 (2016-08-18)<br>See paragraphs [0004]-[0032]. | 1-15 |
| A | KR 10-2019-0136177 A (KOREA INSTITUTE OF SCIENCE AND TECHNOLOGY) 10 December 2019 (2019-12-10)<br>See paragraphs [0039]-[0083]; and figures 1-3. | 1-15 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 January 2024** | **31 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/017318**

| Patent document cited in search report | | | Publication date (day/month/year) | Patent family member(s) | | | Publication date (day/month/year) |
|---|---|---|---|---|---|---|---|
| KR | 10-2014-0139053 | A | 04 December 2014 | CN | 104185866 | A | 03 December 2014 |
| | | | | CN | 104185866 | B | 07 September 2016 |
| | | | | EP | 2805322 | A1 | 26 November 2014 |
| | | | | EP | 2805322 | B1 | 29 June 2016 |
| | | | | JP | 2015-518312 | A | 25 June 2015 |
| | | | | JP | 6138910 | B2 | 31 May 2017 |
| | | | | KR | 10-1655003 | B1 | 06 September 2016 |
| | | | | US | 2013-0259250 | A1 | 03 October 2013 |
| | | | | US | 9082389 | B2 | 14 July 2015 |
| | | | | WO | 2013-148840 | A1 | 03 October 2013 |
| WO | 2020-188250 | A1 | 24 September 2020 | CN | 113597773 | A | 02 November 2021 |
| | | | | KR | 10-2021-0141585 | A | 23 November 2021 |
| | | | | US | 10595151 | B1 | 17 March 2020 |
| | | | | US | 11026041 | B2 | 01 June 2021 |
| | | | | US | 2020-0304936 | A1 | 24 September 2020 |
| KR | 10-2017-0085874 | A | 25 July 2017 | None | | | |
| US | 2016-0241948 | A1 | 18 August 2016 | CN | 103269465 | A | 28 August 2013 |
| | | | | CN | 103269465 | B | 07 September 2016 |
| | | | | EP | 2843915 | A1 | 04 March 2015 |
| | | | | EP | 2843915 | A4 | 02 September 2015 |
| | | | | EP | 2843915 | B1 | 31 August 2016 |
| | | | | JP | 2015-524224 | A | 20 August 2015 |
| | | | | JP | 5770405 | B2 | 26 August 2015 |
| | | | | KR | 10-1542027 | B1 | 04 August 2015 |
| | | | | KR | 10-2015-0005924 | A | 15 January 2015 |
| | | | | US | 9467769 | B2 | 11 October 2016 |
| | | | | WO | 2014-187332 | A1 | 27 November 2014 |
| KR | 10-2019-0136177 | A | 10 December 2019 | KR | 10-2113572 | B1 | 02 June 2020 |
| | | | | KR | 10-2196519 | B1 | 30 December 2020 |

Form PCT/ISA/210 (patent family annex) (July 2022)